(19) Europäisches Patentamt
European Patent Office
Office européen des brevets

(11) EP 2 253 584 A1

(12) # EUROPEAN PATENT APPLICATION

(43) Date of publication:
**24.11.2010 Bulletin 2010/47**

(21) Application number: **10176569.1**

(22) Date of filing: **12.12.2003**

(51) Int Cl.:
***C01B 3/22** (2006.01)* ***C01B 3/24** (2006.01)*
***C01B 3/36** (2006.01)* ***C25B 1/02** (2006.01)*

(84) Designated Contracting States:
**DE FR GB**

(30) Priority: **17.12.2002 US 321935**
**07.08.2003 US 636093**

(62) Document number(s) of the earlier application(s) in accordance with Art. 76 EPC:
**03814743.5 / 1 572 580**

(71) Applicant: **Ovonic Battery Company, Inc.**
**Troy, MI 48084 (US)**

(72) Inventors:
- **Reichman, Benjamin**
**West Bloomfiled, MI 48323 (US)**
- **Mays, William**
**Commerce, MI 48382 (US)**

(74) Representative: **Pautex Schneider, Nicole Véronique et al**
**Novagraaf International SA**
**25, Avenue du Pailly**
**1220 Les Avanchets - Geneva (CH)**

Remarks:
This application was filed on 14-09-2010 as a divisional application to the application mentioned under INID code 62.

(54) **Electrolytic production of hydrogen and carbonate recycling in a hydrogen producing reaction**

(57) The present invention concerns a process for producing hydrogen gas comprising the steps of : reacting an organic substance with a first metal hydroxide in a first reaction, said first reaction producing hydrogen gas and a first metal carbonate; and reacting said first metal carbonate with a second metal hydroxide in a second reaction, said second reaction producing a second metal carbonate.

EP 2 253 584 A1

## Description

### CROSS-REFERENCE TO RELATED APPLICATIONS

This application claims priority from U.S. Patent Application Serial No. 10/321,935 (which is a continuation-in-part of U.S. Patent No. 6,607,707), the disclosure of which is incorporated by reference herein, and also claims priority from U.S. Patent Application Serial No. 10/636,093 (which is a continuation-in-part of U.S. Patent Application Serial No. 10/321,935 and a continuation-in-part of U.S. Patent No. 6,607,707), the disclosure of which is incorporated by reference herein.

### FIELD OF THE INVENTION

This invention pertains to electrolytic reactions of organic substances to form hydrogen gas. More specifically, this invention pertains to the generation of hydrogen gas through the electrolysis of organic substances in the presence of water, acids and/or bases. Most specifically, this invention pertains to the production of hydrogen gas at or near room temperature through the electrolysis of alcohols in the presence of a base. This invention also pertains to the recovery and reutilization of one or more by-products formed in hydrogen producing reactions involving chemical or electrochemical reactions of organic substances with bases.

### BACKGROUND OF THE INVENTION

In order to prevent the increasingly deleterious effects of fossil fuels, new energy sources are needed. The desired attributes of a new fuel or energy source include low cost, plentiful supply, renewability, safety, and environmental compatibility. Hydrogen is currently the best prospect for these desired attributes and offers the potential to greatly reduce our dependence on conventional fossil fuels. Hydrogen is available from a variety of sources including coal, natural gas, hydrocarbons in general, organic materials, inorganic hydrides and water. Hydrogen is also a clean fuel source since the combustion of hydrogen produces water as a by-product.

The realization of hydrogen as a ubiquitous source of energy ultimately depends on its economic feasibility. Economically viable methods for producing hydrogen as well as efficient means for storing, transferring, and consuming hydrogen, are needed. Chemical and electrochemical methods have been proposed for the production of hydrogen. The most readily available chemical feedstocks for hydrogen are organic compounds, primarily hydrocarbons and oxygenated hydrocarbons.

Steam reformation and the electrochemical generation of hydrogen from water through electrolysis are two common strategies currently used for producing hydrogen. Both strategies, however, suffer from drawbacks that limit their practical application and/or cost effectiveness. Steam reformation reactions are endothermic at room temperature and therefore require heating. Temperatures of a few to several hundred degrees are needed to realize acceptable reaction rates. These temperatures are costly to provide, impose special requirements on the materials used to construct the reactors, and limit the range of applications. Steam reformation reactions also occur in the gas phase, which means that hydrogen must be recovered from a mixture of gases through a separation process that adds cost and complexity to the reformation process. Steam reformation also leads to the production of the undesirable greenhouse gases $CO_2$ and/or CO as by-products. Water electrolysis has not been widely used in practice because high expenditures of electrical energy are required to effect water electrolysis. The water electrolysis reaction requires a high minimum voltage to initiate and an even higher voltage to achieve practical rates of hydrogen production. The high voltage leads to high electrical energy costs for the water electrolysis reaction and has inhibited its widespread use.

It is evident that a need exists for producing hydrogen in an efficient, economically feasible, and environmentally friendly way. It is desirable to have a process for producing hydrogen that operates at or near room temperature with minimal energy consumption. It is also desirable to have a process for producing hydrogen that avoids or minimizes the generation of environmentally harmful gases as by-products.

### SUMMARY OF THE INVENTION

There is disclosed herein a process for producing hydrogen gas through the electrolysis of organic substances. The electrolysis process comprises the step of applying a voltage to a solution that includes an oxidizable organic substance. In addition to the organic substance, the electrolyte solution may include water, a base and/or an acid. The applied voltage effects reaction of the organic substance to produce hydrogen gas. In the absence of a base, the organic substance reacts primarily with water in an electrolysis reaction to produce hydrogen gas and carbon dioxide gas as a by-product. In the presence of a base, the organic substance reacts primarily with hydroxide ion to produce hydrogen gas along with bicarbonate ion and/or carbonate ion as by products. Inclusion of a base provides for hydrogen production

without generation of a greenhouse gas and without the need to separate hydrogen from other gas phase products. The electrolytic reaction can be run at room temperature. The hydrogen gas produced in the electrolytic reaction can be delivered to a hydrogen-based energy or storage device such as hydrogen storage alloy or used as a fuel.

A wide variety of organic substances are suitable for the present invention. In a preferred embodiment, the organic substance is more readily oxidized than water. Representative organic substances that produce hydrogen according to the instant invention include hydrocarbons, alcohols, aldehydes, sugars, ketones, carboxylic acids and ethers. Metal hydroxides are the preferred bases. In a particularly preferred embodiment of the present invention, hydrogen gas is produced from the reaction of methanol with potassium hydroxide in aqueous solution in an electrochemical reaction cell that includes Pt/C electrodes.

The instant invention also provides a process for producing hydrogen gas from reactions of organic substances with bases in which carbonate and/or bicarbonate ion is produced as a by-product. The instant process includes a carbonate ion recycle process in which the carbonate ion by-product is transformed to a base that can subsequently be further reacted with an organic substance to produce hydrogen gas. The instant process provides a way to recover and recycle a carbonate ion by-product. The recycle process includes a first step in which carbonate ion is reacted with a metal hydroxide to form a soluble metal hydroxide and a weakly soluble or insoluble carbonate salt. The soluble metal hydroxide may be returned to the hydrogen producing reaction as a reactant for further production of hydrogen. In a second step, the carbonate salt is thermally decomposed to produce a metal oxide and carbon dioxide. In a third step, the metal oxide is reacted with water to reform the metal hydroxide used in the first step. The carbonate recycle process is thus sustainable with respect to the metal hydroxide and the overall hydrogen producing process is sustainable with respect to the base. Bicarbonate by-products of hydrogen producing reactions of organic substances with bases can be similarly recycled by first converting a bicarbonate by-product to a carbonate and then recycling the carbonate.

## BRIEF DESCRIPTION OF THE DRAWINGS

Fig. 1, Current as a function of voltage applied to electrochemical cells used to effect electrolysis of methanol in water in the presence of sulfuric acid and electrolysis of water in the presence of sulfuric acid.

Fig. 2. Current as a function of voltage applied to electrochemical cells used to effect electrolysis of methanol in water in the presence of potassium hydroxide and electrolysis of water in the presence of potassium hydroxide.

Fig. 3. Current as a function of voltage applied to electrochemical cells used to effect electrolysis of methanol in water in the presence of potassium hydroxide (9 M) and electrolysis of water in the presence of potassium hydroxide (12 M) at 23˚C and 60 ˚C.

Fig. 4. Current as a function of voltage applied to electrochemical cells used to effect electrolysis of methanol in the presence of potassium hydroxide (6.4 M) without intentional inclusion of water at 38 ˚C and 60 ˚C.

## DETAILED DESCRIPTION OF THE INVENTION

The instant invention provides a further method for efficiently producing hydrogen gas ($H_2$) from organic substances. The method of the instant invention subjects an organic substance to an electrolysis reaction in the presence of water in an acidic solution or in the presence of a base. The electrolysis reaction includes applying a potential to an electrochemical cell that contains the organic substance in order to effect a reaction that liberates hydrogen gas. An advantage of the instant invention is that it permits the production of hydrogen at room temperature from readily available organic substances.

Conceptually, the production of hydrogen from water is an ideal method for obtaining hydrogen. The underlying reaction for the production of hydrogen from water is the following water splitting reaction:

$$H_2O_{(l)} \leftrightarrows H_{2(g)} + \frac{1}{2}O_{2(g)}$$

This reaction is a desirable approach for producing hydrogen because water is a widely available starting material and oxygen gas is an inert by product. The drawback associated with the reaction is that it is not thermodynamically spontaneous at room temperatures and consequently does not proceed unless external energy is applied. The external energy may be provided in the form of heat or electrical potential. The practical difficulty in obtaining hydrogen from water is the high required energy expenditure. If energy in the form of heat is provided, the required temperatures are impractically high. Similarly, if electrical energy is provided, the required potentials are high and costly to maintain.

In order to appreciate the magnitude of the energy expenditure required to obtain hydrogen from water, we consider the water electrolysis reaction. In water electrolysis, energy in the form of electrical energy is applied to water in order to induce the production of hydrogen according to the foregoing water splitting reaction. When effected by an electrical potential, the foregoing water splitting reaction (1) may be referred to as a water electrolysis reaction. The water electrolysis reaction may be conducted in an electrochemical cell that includes an anode and a cathode where an oxidation reaction occurs at the anode and a reduction reaction occurs at the cathode. Water electrolysis may be conducted in the presence of an acid or a base.

In water electrolysis in the presence of an acid, the following reactions occur at the anode and cathode:

$$H_2O_{(l)} \leftrightarrows \tfrac{1}{2}O_{2(g)} + 2H^+_{(aq)} + 2e^- \qquad \text{(anode, oxidation)}$$

$$2H^+_{(aq)} + 2e^- \leftrightarrows H_{2(g)} \qquad \text{(cathode, reduction)}$$

$$H_2O_{(l)} \leftrightarrows H_{2(g)} + \tfrac{1}{2}O_{2(g)} \qquad \text{(overall)}$$

where $e^-$ denotes an electron. At 298 K with all species in their standard states (pure substance for liquids and solids, 1 M for dissolved species, and 1 atm pressure for gases), the half-cell potential of the anode reaction is -1.23 V and the half-cell potential of the cathode reaction is 0 V. (All half-cell potentials reported herein are relative to the normal hydrogen electrode.) The resulting total standard cell voltage $E^0_{cell}$ is the sum of the two half-cell potentials and is equal to -1.23 V. The negative total cell voltage indicates that the overall reaction does not occur spontaneously at 298 K and standard state conditions.

In water electrolysis in the presence of a base, the following reactions occur at the anode and cathode:

$$2OH^-_{(aq)} \leftrightarrows \tfrac{1}{2}O_{2(g)} + H_2O_{(l)} + 2e^- \qquad \text{(anode, oxidation)}$$

$$2H_2O_{(l)} + 2e^- \leftrightarrows H_{2(g)} + 2OH^-_{(aq)} \qquad \text{(cathode, reduction)}$$

$$H_2O_{(l)} \leftrightarrows H_{2(g)} + \tfrac{1}{2}O_{2(g)} \qquad \text{(overall)}$$

where $e^-$ denotes an electron. At 298 K with all species in their standard states (pure substance for liquids and solids, 1 M for dissolved species, and 1 atm pressure for gases), the half-cell potential of the anode reaction is -0.40 V and the half-cell potential of the cathode reaction is -0.83 V. The resulting total standard cell voltage $E^0_{cell}$ is the sum of the two half-cell potentials and is equal to -1.23 V. The negative total cell voltage indicates that the overall reaction does not occur spontaneously at 298 K and standard state conditions.

In order to effect the water electrolysis reaction in the presence of an acid or a base, a minimum external voltage in an amount equal to the total cell voltage is required. From the above analysis at standard state conditions, 1.23 V is the minimum voltage required to initiate the water electrolysis reaction in the presence of an acid or a base. In practice, it has been found that voltages of about 2.0 V are needed for either reaction to proceed at a reasonable rate. Since the required voltage is high, a significant and costly expenditure of electrical energy is needed to achieve water electrolysis at practical rates.

The foregoing analysis is predicated on a temperature of 298 K and standard state conditions. Changes in temperature, gas pressure etc. influence the minimum and practical voltages needed to run the water electrolysis reaction. Conditions corresponding to more favorable voltages may be found, but a more rigorous electrochemical analysis shows that reasonable variations in conditions have only a modest effect on the voltages and that conditions considered to be practical may still require high voltages.

While recognizing that water electrolysis is a feasible approach for producing hydrogen, the instant inventors wish to identify more cost-effective methods. In U.S. Patent No. 6,607,707 the instant inventors considered the production of hydrogen from hydrocarbons and oxygenated hydrocarbons. As in hydrogen production from water, the production of hydrogen from most hydrocarbons and many oxygenated hydrocarbons occurs through reactions that are not spontaneous at standard conditions. In these reactions, spontaneity is assessed through the Gibbs energy of reaction, rather than electrochemical cell voltage, where a negative Gibbs energy of reaction corresponds to a spontaneous reaction. Conventionally, hydrogen is produced from hydrocarbons through reformation reactions with water to form hydrogen gas along with carbon dioxide as a by-product. Since these reformation reactions have large and positive Gibbs energies

of reaction, high temperatures are required to initiate them and even higher temperatures are required to achieve reasonable hydrogen production rates. The high temperatures provide reaction conditions at which the Gibbs energy of reaction becomes negative. Reformation of oxygenated hydrocarbons (e.g. methanol, ethanol, formic acid, formaldehyde etc.) with water to form hydrogen and carbon dioxide is also possible and frequently occurs through reactions having smaller Gibbs energies of reaction than those of hydrocarbon reformation reactions. In some reformation reactions of oxygenated hydrocarbons with water, small negative values of the Gibbs energy of reaction are observed and these reactions occur spontaneously, albeit slowly, at standard conditions.

In order to promote the reformation reactions of hydrocarbons and oxygenated hydrocarbons, the instant inventors in U.S. Patent No. 6,607,707 considered factors that may facilitate reformation reactions. The instant inventors recognize the need to identify reactions or conditions that lead to lower, and preferably negative, values of the Gibbs energy of reaction so that hydrogen production is promoted. Preferably, the Gibbs free energy of reaction should be negative at a temperature near or below room temperature in order to achieve efficient room temperature production of hydrogen.

U.S. Patent No. 6,607,707 teaches the use of bases as a method for lowering the Gibbs energy of reaction of hydrogen producing reactions that utilize hydrocarbons or oxygenated hydrocarbons as starting materials. Specifically, the instant inventors applied a thermodynamic analysis and demonstrated that reactions of bases with many hydrocarbons or oxygenated hydrocarbons have lower Gibbs energies of reactions and occur at lower temperatures than conventional reformation processes using water and no base. Inclusion of a base leads to hydrogen production along with the bicarbonate ion ($HCO_3^-$) or carbonate ion ($CO_3^{2-}$) as by-products. Table 1 shows the extent to which the Gibbs energy of reaction decreases in the presence of a base for reactions that produce hydrogen from methanol.

**Table 1**

Gibbs Free Energy of Reaction ($\Delta G_{rxn}$) for Hydrogen Producing Reactions of Methanol (25 ˚C, 1 atm. and unit activity of reactants and products)

| Reaction | $\Delta G_{\rho\xi\nu}$ (calories) |
|---|---|
| $CH_3OH + H_2O \leftrightarrows 3H_2 + CO_2$ | 4,130 |
| $CH_3OH + OH^- + H_2O \leftrightarrows 3H_2 + HCO_3^-$ | -4,325 |
| $CH_3OH + 2OH^- \leftrightarrows 3H_2 + CO_3^{2-}$ | -9,330 |

The first reaction in Table 1 is the conventional reformation reaction of methanol with water. The other two reactions show the production of hydrogen from methanol in the presence of hydroxide ion provided by a base. The table indicates that the conventional reformation reaction is not spontaneous at the stated reaction conditions and that the addition of base leads to spontaneous reactions. The lowering of the Gibbs energy of reaction through the addition of base enables hydrogen production from methanol at room temperature. Alternatively, if temperatures above room temperature are used to enhance the rate of production of hydrogen, the data in the table indicate that inclusion of a base will provide more spontaneous reactions. In U.S. Patent No. 6,607,707 the instant inventors provided exemplary embodiments illustrating the expectations of Table 1 and showed that the production of hydrogen occurs more spontaneously or at a lower practical temperature relative to the conventional reformation reaction when a base is present. Similar results were demonstrated for several other hydrocarbons and oxygenated hydrocarbons.

In the instant invention, the instant inventors consider methods, other than or in addition to modifying the chemical environment through the addition of a base, which may promote the production of hydrogen. Even though, as described hereinabove, the water electrolysis reaction requires a high electrochemical cell voltage, the principle of using an electrochemical cell voltage to facilitate a chemical reaction is sound and is utilized in the instant invention. An objective of the instant invention is to identify reactions or conditions that produce hydrogen at a lower electrochemical cell potential than is required for the water electrolysis reaction.

In one embodiment, the instant invention provides electrochemical reactions of organic substances with water that require low electrochemical cell voltages at room temperature. In another embodiment, the instant invention provides electrochemical reactions of organic substances in the presence of an acid or base that require low electrochemical cell voltages at room temperature. In some embodiments, hydrogen production reactions of organic substances occur spontaneously at room temperature in an electrochemical reaction and are accelerated by heating. In other embodiments, hydrogen production reactions of organic substances occur spontaneously at room temperature without applying a voltage and are accelerated by providing a voltage.

In order to illustrate the principles and scope of the instant invention, the production of hydrogen from methanol

in an electrochemical reaction is considered. Although the specific example of methanol is considered in the following discussion, this discussion is not intended to limit to scope of practice of the instant invention. The example of methanol is illustrative of, rather than limiting of, the full scope of the instant invention.

In one embodiment, hydrogen may be produced from an electrochemical reaction of methanol and water. This embodiment may be referred to as methanol electrolysis and is analogous to the water electrolysis reaction discussed hereinabove. The anode, cathode and overall reactions that occur in methanol electrolysis in the presence of an acid are given below:

$$CH_3OH_{(l)} + H_2O_{(l)} \leftrightarrows CO_{2(g)} + 6H^+_{(aq)} + 6e^- \qquad \text{(anode, oxidation)}$$

$$6H^+_{(aq)} + 6e^- \leftrightarrows 3H_{2(g)} \qquad \text{(cathode, reduction)}$$

$$CH_3OH_{(l)} + H_2O_{(l)} \leftrightarrows CO_{2(g)} + 3H_{2(g)} \qquad \text{(overall)}$$

The cell potential of the reaction can be determined from the Gibbs energy change of the reaction using the equation

$$E_{Cell} = -\frac{\Delta G}{nF}$$

or, at standard conditions,

$$E^0_{Cell} = -\frac{\Delta G^0}{nF}$$

where $E_{Cell}$ is the cell voltage, $\Delta G$ is the Gibbs energy of reaction, n is the number of electrons transferred, F is the Faraday constant

$$\left(F = 96.485\frac{kJ}{V-mol}\right)$$

standard conditions. The former equation is a general equation that may be used for arbitrary reaction conditions, while the latter equation applies to systems at 298 K and standard state conditions. The latter equation is commonly used because data for $\Delta G^0$ is typically reported in thermodynamic handbooks. Alternatively, $\Delta G^0$ may be computed from Gibbs energy of formation data for the compounds that participate in the reaction and this data is also typically reported at 298 K and standard state conditions. Once the value of the standard cell voltage $E^0_{Cell}$ is known, standard equations can be used to account for deviations of temperature, pressure, concentration etc. from 298 K and standard state conditions. Also, the above equations indicate that $\Delta G$ (or $\Delta G^0$) and $E_{Cell}$ (or $E^0_{Cell}$) have opposite signs. The condition for spontaneity of a reaction may therefore be expressed as a requirement for a negative value of $\Delta G$ or a positive value of $E_{Cell}$.

The standard cell voltage for the methanol and water electrolysis reactions, along with quantities used in the calculation thereof, are shown in Table 2 below:

**Table 2**

Comparison of the standard cell potential $E^0_{Cell}$ of the methanol electrolysis and water electrolysis reactions.

| Reaction | $\Delta G^0$ (kJ/mol) | n | $E^0_{Cell}$ (V) |
|---|---|---|---|
| $CH_3OH_{(l)} + H_2O_{(l)} \leftrightarrows CO_{2(g)} + 3H_{2(g)}$ | 8.99 | 6 | -0.016 |
| $H_2O_{(l)} \leftrightarrows H_{2(g)} + ½O_{2(g)}$ | 237.19 | 2 | -1.23 |

The data of Table 2 indicate that the standard cell potential of the methanol electrolysis reaction is much less negative than that of the water electrolysis reaction. The negative cell potential of the methanol electrolysis reaction indicates that this reaction does not proceed spontaneously, but the small magnitude of the cell potential indicates that only a small voltage is needed to effect the reaction. The voltage required to initiate a reaction may be defined as the external voltage required to increase the cell potential from a negative value to zero. Based on the data of Table 2, for example, a voltage of 0.016 V is needed to initiate the methanol electrolysis reaction at 298 K and standard state conditions. Voltages above 0.016 V both initiate and accelerate the methanol electrolysis reaction. Much higher voltages are needed to initiate and accelerate the water electrolysis reaction. Accordingly, the methanol electrolysis reaction produces hydrogen under more favorable conditions (e.g. lower operating voltages or lower operating temperatures) than the water electrolysis reaction.

Although the data of Table 2 are based on a temperature of 298 K and standard state conditions, the general result that the methanol electrolysis reaction lower voltages or lower temperatures to initiate or operate at a given rate. Stated alternatively, the methanol electrolysis reaction requires less external energy to become spontaneous than water electrolysis. The lower required external energy means that methanol electrolysis produces hydrogen with a lower expenditure of energy and that its conditions of operation are more cost effective for a given rate of hydrogen production.

In other embodiments of the instant invention, hydrogen is produced from an electrochemical reaction of methanol with a base. The base provides a hydroxide ion that is capable of reacting with methanol. In one embodiment, methanol reacts with one equivalent of hydroxide ion according to the following anode, cathode and overall reactions:

$$CH_3OH_{(l)} + 7OH^-_{(aq)} \leftrightarrows HCO_3^-{}_{(aq)} + 5H_2O_{(l)} + 6e^- \quad \text{(anode, oxidation)}$$

$$6H_2O_{(l)} + 6e^- \leftrightarrows 3H_{2(g)} + 6OH^-_{(aq)} \quad \text{(cathode, reduction)}$$

$$CH_3OH_{(l)} + OH^-_{(aq)} + H_2O_{(l)} \leftrightarrows HCO_3^-{}_{(aq)} + 3H_{2(g)} \quad \text{(overall)}$$

In this reaction, hydrogen gas is produced along with bicarbonate ion as a by-product. Methanol may also react with two equivalents of hydroxide ion to produce hydrogen gas along with carbonate ion as a by-product according to the following anode, cathode and overall reactions:

$$CH_3OH_{(l)} + 8OH^-_{(aq)} \leftrightarrows CO_3^{2-}{}_{(aq)} + 6H_2O_{(l)} + 6e^- \quad \text{(anode, oxidation)}$$

$$6H_2O_{(l)} + 6e^- \leftrightarrows 3H_{2(g)} + 6OH^-_{(aq)} \quad \text{(cathode, reduction)}$$

$$CH_3OH_{(l)} + 2OH^-_{(aq)} \leftrightarrows CO_3^{2-}{}_{(aq)} + 3H_{2(g)} \quad \text{(overall)}$$

The amount of base present in the reaction mixture is an important consideration in establishing whether methanol reacts primarily with one or two equivalents of hydroxide ion in the overall reaction. In principle, both reactions can occur simultaneously and in practice, the specific reaction conditions determine whether one overall reaction is more important than the other overall reaction. When small amounts of base are present, overall reaction of methanol with one equivalent of hydroxide is more likely than overall reaction of methanol with two equivalents of hydroxide. As the amount of base increases, however, overall reaction of methanol with two equivalents of hydroxide becomes increasingly more likely and eventually becomes controlling. The concentration of hydroxide ion is an important factor that dictates whether the overall reaction of methanol occurs primarily with one or two equivalents of hydroxide ion. Consequently, the initial pH of the reaction mixture provides an indication of whether methanol reacts primarily with one or two

equivalents of hydroxide ion. Thermodynamic data shows that reaction of methanol with one equivalent of hydroxide ion is more likely when the pH of the initial reaction mixture is between about 6.4 and 10.3 and that reaction of methanol with two equivalents of hydroxide ion is controlling when the pH of the initial reaction mixture is above about 10.3. When the pH of the initial reaction mixture is below about 6.4, the reaction of methanol with water is controlling, but reactions of methanol with hydroxide ion may still occur.

The standard cell potentials of the reactions of methanol with one or two equivalents of hydroxide ion can be calculated using the method described hereinabove. The results of the calculation are shown in Table 3 below:

**Table 3**

Standard cell potential $E^0_{Cell}$ of reactions of methanol with one or two equivalents of hydroxide ion.

| Reaction | $\Delta G^0$(kJ/mol) | n | $E^0_{Cell}$ (V) |
|---|---|---|---|
| $CH_3OH_{(l)} + OH^-_{(aq)} + H_2O_{(l)} \leftrightarrows HCO_3^-{}_{(aq)} + 3H_{2(g)}$ | -26.37 | 6 | 0.046 |
| $CH_3OH_{(l)} + 2OH^-_{(aq)} \leftrightarrows CO_3^{2-}{}_{(aq)} + 3H_{2(g)}$ | -47.3 | 6 | 0.082 |

Table 3 indicates that the reactions of methanol with one or two equivalents of hydroxide ion exhibit positive standard cell voltages. Both reactions therefore occur spontaneously at 298 K and standard conditions without the need to apply an external electrical potential or external heating. The application of an external electrical potential or external heating serves to increase the rate of production of hydrogen relative to standard conditions. The reactions of methanol with hydroxide ion may therefore provide high rates of hydrogen production at low voltages and/or at temperatures at or near room temperature.

The foregoing discussion of hydrogen production from methanol demonstrates that hydrogen may be produced under more favorable conditions from methanol than from water. The operating voltage or operating temperature required to obtain a given rate of hydrogen production is lower through reactions of methanol compared to reactions of water. Similarly, for a given operating voltage, operating temperature or combination thereof, the rate of hydrogen production from methanol is higher than the rate of hydrogen production from water.

In addition to methanol, hydrogen may be produced from a variety of organic substances using the instant invention. A preferred characteristic of organic substances suitable for the instant invention is that they be more readily oxidizable than water at a common temperature and corresponding reaction conditions. As used herein, oxidizability refers to the voltage required to initiate a hydrogen producing reaction of an organic substance. In the comparison of methanol electrolysis and water electrolysis discussed in Table 2 hereinabove, for example, initiation of water electrolysis required a voltage of 1.23 V at 298 K and standard conditions and initiation of methanol electrolysis required a voltage of 0.016 V at 298 K and standard conditions. Methanol is thus more oxidizable than water at 298 K and standard conditions. Oxidizability may be similarly defined for temperatures other than 298 K and for non-standard conditions. Pressure, concentration etc. may deviate from standard conditions. Oxidizability further extends to reactions of organic substances with bases where corresponding conditions implies corresponding amounts of base. Organic substances for which conditions can be found such that the organic substance is more oxidizable than water are within the scope of the instant invention. Specific systems include alcohols (methanol, ethanol, etc.), aldehydes (formaldehyde, acetaldehyde, etc.), carboxylic acids (formic acid, acetic acid, etc.), ketones (acetone, etc.), sugars and ethers (dimethyl ether, methyl ethyl ether, diethyl ether, etc.). These substances may produce hydrogen through reactions with water, water in the presence of an acid, water in the presence of a base and/or a base.

Bases suitable for use in the instant invention are compounds that provide hydroxide ions. Metal hydroxides are the preferred bases. Representative metal hydroxides include alkali metal hydroxides (e.g. NaOH, KOH etc.) alkaline earth metal hydroxides (e.g. $Ca(OH)_2$, $Mg(OH)_2$, etc.), transition metal hydroxides, post-transition metal hydroxides and rare earth hydroxides. Non-metal hydroxides such as ammonium hydroxide may also be used.

Methods of producing hydrogen according to the instant invention include combining an organic substance with water and applying a voltage. Other of the instant methods include combining an organic substance with a base and applying a voltage. In a typical experimental configuration, an electrolyte solution containing the organic substance along with water and/or a base is placed in an electrochemical cell that includes an anode and a cathode where a voltage is applied between the anode and cathode to induce or accelerate an electrochemical reaction. A reference or counterelectrode may also be present. The electrodes known in the art are suitable for use in the instant invention. Representative electrodes include those based on carbon, nickel, platinum, transition metals, metal alloys, and hydrogen storage materials. The electrochemical cell may optionally be heated. It is desirable for the voltage applied to be as small as possible so that the energy expenditure is minimized. In a preferred embodiment, the magnitude of the voltage

applied is less than 1.0 V. In a more preferred embodiment, the magnitude of the voltage applied is less than 0.5 V. In a most preferred embodiment, the magnitude of the voltage applied is less than 0.25 V.

In the methods of the instant invention, a conductivity-enhancing agent may also be included in the electrolyte in order to improve conductivity and enhance electrochemical activity. A conductivity-enhancing agent may be useful when the ionizability of the organic substance is low and no other readily ionizable species is present. Ionizability is a measure of a substance's ability to dissociate into ions in solution. Since ions are the preferred charge carriers in an electrolytic solution, it is desirable to have a sufficient number of ions available to insure adequate conductivity to complete an electrochemical reaction. Since most organic substances exhibit low ionizability, electrochemical reactions of organic substances typically require the presence of an ionizable compound in the electrolyte solution. The conductivity-enhancing agent may or may not participate in the electrochemical reaction. In the instant reactions of organic substances with bases, for example, the base may function as both a reactant and a conductivity-enhancing agent since many hydroxide bases ionize to a high degree in solution. In the instant reactions of organic substances with water in the absence of a base, it is preferable to include a non-participating conductivity-enhancing agent because water does not appreciably dissociate into ions. Conductivity-enhancing agents are generally ionic substances that readily dissociate into ions in solution. Examples of conductivity-enhancing agents include salts, acids and bases.

In selecting a conductivity-enhancing agent, it is important that it or the ions formed from it do not interfere with or impede the electrochemical reaction used to produce hydrogen. The conductivity-enhancing agent or ions obtained upon its dissociation may represent species that oxidize at the anode or reduce at the cathode of the electrochemical cell. These reactions may compete with or dominate the anode or cathode reactions needed to produce hydrogen, thereby impeding or preventing hydrogen formation. These competing reactions may also produce unwanted by-products. Unless the conductivity-enhancing agent is a reactant in the hydrogen producing reactant, it is preferable that it does not undergo substantial oxidation or reduction, but rather acts only to facilitate conductivity in the electrochemical cell.

The instant inventors have completed several experiments that demonstrate the production of hydrogen from organic substances in an electrochemical cell. Representative specific experiments are described hereinbelow and are followed by a discussion of carbonate and bicarbonate ion recycling in chemical and electrochemical reactions of organic substances with bases to form hydrogen.

**EXAMPLE 1**

In this example, one embodiment of methanol electrolysis according to the instant invention is described. The reaction was completed at room temperature in a testing electrochemical cell that included an anode, a cathode, and an electrolyte solution assembled within a 250 mL beaker. The anode included 20% Pt supported on high surface area carbon on a Toray paper substrate. The geometric area of the electrode was 4.1 $cm^2$. The cathode was identical in design to the anode. The anode and cathode were separated by 5.5 cm in the testing electrochemical cell. The electrolyte solution consisted of 50 mL methanol and 50 mL of a 1M aqueous solution of sulfuric acid. The sulfuric acid is present as a conductivity-enhancing agent and is present at constant concentration during the course of the methanol electrolysis reaction.

For comparison purposes, an analogous electrochemical cell without methanol was constructed. The electrolyte in the comparison cell consisted of 100 mL of a 1M aqueous solution of sulfuric acid. Except for the electrolyte, the comparison electrochemical cell was identical to the one used for methanol electrolysis. In the comparison cell, the electrochemical reaction is water electrolysis in the presence of sulfuric acid.

Once assembled, the testing and comparison electrochemical cells were tested for electrochemical activity at room temperature. The test protocol consisted of applying a voltage from an external source and measuring the current produced by the electrochemical reaction. When no reaction occurs, no current flows through the electrochemical cell. If the voltage is sufficient to initiate a reaction, a current develops in the cell. The greater the magnitude of the current, the greater the rate of reaction and the greater the rate of hydrogen production.

The test results are provided in Figure 1 herein which shows a plot of the current that develops in the electrochemical cell as a function of the voltage applied by an external source. The curve labeled "$H_2O$(1M $H_2SO_4$)" is the result obtained for the water electrolysis reaction conducted in the comparison cell and the curve labeled "Methanol/$H_2O$ (1M $H_2SO_4$)" is the result obtained for the methanol electrolysis reaction conducted in the testing cell. The results for the methanol electrolysis reaction have been corrected for the Ohmic resistance of the testing cell. The results for the water electrolysis reaction have not been corrected for the Ohmic resistance of the comparison cell.

The results for the water electrolysis reaction show that current is not produced in the comparison cell until the voltage is increased to about 1.9 V. Absence of a current below about 1.9 V indicates that the water electrolysis reaction does not occur at those voltages. Initiation of the reaction occurs at about 1.9 V and acceleration of the reaction occurs upon further increasing the voltage above about 1.9 V. These results indicate that voltage at or above 1.9 V are needed to produce hydrogen from the water electrolysis reaction in the comparison cell.

The results for the methanol electrolysis reaction show that the methanol electrolysis reaction is initiated at a

voltage below 1.0 V and rapidly accelerates at voltages above about 1.1 V. These results indicate that appreciable rates of hydrogen production occur in the methanol electrolysis reaction conducted in the testing cell at voltages near and above 1.0 V.

This example shows that hydrogen production from methanol electrolysis occurs at lower voltages than hydrogen production from water electrolysis.

**EXAMPLE 2**

In this example, production of hydrogen from the electrolysis reaction of methanol in the presence of a base is demonstrated. The reaction was completed in a testing electrochemical cell that included an anode, a cathode, and an electrolyte solution assembled within a 100 mL beaker. The anode included 20% Pt supported on high surface area carbon on a silver plated nickel substrate. The geometric area of the electrode was 2 $cm^2$. The cathode was identical in design to the anode. The anode and cathode were separated by 1 cm in the testing electrochemical cell. The electrolyte solution consisted of 40 mL methanol, 20 mL water, and 60 g KOH. The KOH dissolved in the solution to provide hydroxide ion. The KOH was used as received from the vendor and may include adsorbed or hydrated water.

For comparison purposes, an analogous electrochemical cell without methanol was constructed. The electrolyte in the comparison cell consisted of 40 mL $H_2O$ and 120 g KOH. The KOH dissolved in the water to provide hydroxide ion. Except for the electrolyte, the comparison electrochemical cell was identical to the one used for the reaction of methanol with KOH. In the comparison cell, the electrochemical reaction is the electrolysis of water in the presence of KOH.

Once assembled, the testing and comparison electrochemical cells were tested for electrochemical activity at 60 °C. The test protocol consisted of applying a voltage from an external source and measuring the current produced by the electrochemical reaction. When no reaction occurs, no current flows through the electrochemical cell. If the voltage is sufficient to initiate a reaction, a current develops in the cell. The greater the magnitude of the current, the greater the rate of reaction and the greater the rate of hydrogen production.

The test results are provided in Figure 2 herein which shows a plot of the current that develops in the electrochemical cell as a function of the voltage applied by an external source. The curve labeled "Water/KOH" is the result obtained for the electrolysis reaction of water in the presence of KOH conducted in the comparison cell and the curve labeled "Methanol/KOH" is the result obtained for the electrolysis reaction of methanol in the presence of KOH conducted in the testing cell. The results for the electrolysis reaction of methanol in the presence of KOH have not been corrected for the Ohmic resistance of the testing cell. The results for the electrolysis reaction of water in the presence of KOH have not been corrected for the Ohmic resistance of the comparison cell.

The results for the electrolysis reaction of water in the presence of KOH show that current is not produced in the comparison cell until the magnitude of the voltage is increased to about 1.4 V. Absence of a current at voltage magnitudes below about 1.4 V indicates that the water electrolysis reaction does not occur at those voltages. Initiation of the reaction occurs at a voltage magnitude of about 1.4 V and acceleration of the reaction occurs upon further increasing the voltage magnitude above about 1.4 V. These results indicate that voltage magnitudes at or above 1.4 V are needed to produce hydrogen from the electrolysis reaction of water in the presence of KOH conducted in the comparison cell.

The results for the electrolysis reaction of methanol in the presence of KOH show that the reaction already takes place at zero voltage conditions. In other words, the electrolysis reaction of methanol in the presence of KOH occurs spontaneously in the absence of an applied voltage. The results further indicate that application of a voltage acts to accelerate the reaction. These results indicate that appreciable rates of hydrogen production occur in the electrolysis reaction of methanol in the presence of KOH conducted in the testing cell at voltage magnitudes at or above 0 V.

This example shows that hydrogen production from the electrolysis reaction of methanol in the presence of KOH occurs at substantially lower voltages than hydrogen production from the electrolysis reaction of water in the presence of KOH.

**EXAMPLE 3**

In this example, the production of hydrogen from methanol and water in the presence of KOH at 23 °C and 60 °C is demonstrated. The reaction at each temperature was completed in a testing electrochemical cell that included an anode, a cathode, and an electrolyte solution assembled within a 250 mL beaker. The anode included 20% Pt supported on a Toray paper substrate. The geometric area of the electrode was 4.1 $cm^2$. The cathode was identical in design to the anode. The anode and cathode were separated by 5.5 cm in the testing electrochemical cell. The electrolyte solution consisted of a 100 mL portion of a solution formed by combining 250 mL methanol, 125 mL water, and 250 g KOH in a separate beaker. The KOH dissolved in the solution to provide hydroxide ion. The concentration of KOH in the electrolyte, expressed in molarity, is 9 M. The KOH was used as received from the vendor and may include adsorbed or hydrated water.

For comparison purposes, an analogous electrochemical cell without methanol was constructed. The electrolyte in the comparison cell consisted of a 100 mL portion of a solution formed by combining 225 mL $H_2O$ and 250 g KOH.

The KOH dissolved in the water to provide hydroxide ion. The concentration of KOH in the electrolyte, expressed in molarity, is 12 M. Except for the electrolyte, the comparison electrochemical cell was identical to the one used for the reaction of methanol with KOH in the testing electrochemical cell. In the comparison cell, the electrochemical reaction is the electrolysis of water in the presence of KOH.

Once assembled, the testing and comparison electrochemical cells were tested for electrochemical activity at 23 ˚C and 60 ˚C. The test protocol consisted of applying a voltage from an external source and measuring the current produced by the electrochemical reaction. When no reaction occurs, no current flows through the electrochemical cell. If the voltage is sufficient to initiate a reaction, a current develops in the cell. The greater the magnitude of the current, the greater the rate of reaction and the greater the rate of hydrogen production.

The results obtained for the testing and comparison cells are provided in Figure 3 herein which shows a plot of the current that develops in each electrochemical cell as a function of the voltage applied by an external source. Curves are shown at 23 ˚C and 60 ˚C for each cell. The curves labeled "Metlaanol/$H_2O$" is the result obtained for the electrolysis reaction of the testing electrochemical cell (production of hydrogen from methanol and water in the presence of KOH) and the curve labeled "$H_2O$" is the result obtained for the electrolysis reaction of the comparison electrochemical cell (production of hydrogen from water in the presence of KOH). The results shown in Fig. 3 have been corrected for the Ohmic resistance of the testing cell and comparison cell.

The results for the production of hydrogen from water in the presence of KOH show that current is not produced in the comparison cell until the magnitude of the voltage is increased to about 1.4 V at 23˚C and about 1.25 V at 60 ˚C. Absence of a current at voltage magnitudes below about 1.4 V and 1.25 V indicates that the water electrolysis reaction does not occur at those voltages at 23˚C and 60 ˚C, respectively. Initiation of the reaction occurs at a voltage magnitude of about 1.4 V at 23 ˚C and about 1.25 V at 60 ˚C and acceleration of the reaction occurs upon further increasing the voltage magnitude above those voltages at each temperature, respectively. These results indicate that voltage magnitudes at or above 1.4 V at 23 ˚C and at or above 1.25 V at 60 ˚C are needed to produce hydrogen from the electrolysis reaction of water in the presence of KOH conducted in the comparison cell.

The results for the electrolysis reaction of methanol and water in the presence of KOH in the testing electrochemical cell show that the reaction already takes place at zero voltage conditions at 23 ˚C and 60 ˚C . In other words, the electrolysis reaction of methanol in the presence of KOH occurs spontaneously in the absence of an applied voltage at both temperatures. The results further indicate that application of a voltage acts to accelerate the reaction. These results indicate that appreciable rates of hydrogen production occur in the electrolysis reaction of methanol and water in the presence of KOH conducted in the testing cell at voltage magnitudes at or above 0 V at both temperatures. A rapid increase in the rate of production of hydrogen is observed above about 0.1 V and 0.3 V at 60 ˚C and 23 ˚C, respectively.

This example shows that hydrogen production from the electrolysis reaction of methanol and water in the presence of KOH occurs at substantially lower voltages than hydrogen production from the electrolysis reaction of water in the presence of KOH at 23 ˚C and 60 ˚C. This example also shows that an increase in temperature promotes both hydrogen production reactions.

**EXAMPLE 4**

In this example, the production of hydrogen from methanol in the presence of KOH with no intentional inclusion of water is demonstrated. The reaction was completed in an electrochemical cell that included an anode, a cathode, and an electrolyte solution assembled within a 250 mL beaker. The anode included 20% Pt supported on a Toray paper substrate. The geometric area of the electrode was 4.1 $cm^2$. The cathode was identical in design to the anode. The anode and cathode were separated by 5.5 cm in the electrochemical cell. The electrolyte solution consisted of a 100 mL portion of a solution formed by combining 250 mL methanol and 90 g KOH in a separate beaker. The KOH dissolved in the solution to provide hydroxide ion. The concentration of KOH in the electrolyte, expressed in molarity, is 6.4 M. The KOH was used as received from the vendor and may include adsorbed or hydrated water. No water, other than any unintentional water accompanying the KOH, was intentionally included in the electrolyte solution.

Once assembled, the electrochemical cell was tested for electrochemical activity at 38 ˚C and 60 ˚C. The test protocol consisted of applying a voltage from an external source and measuring the current produced by the electrochemical reaction. When no reaction occurs, no current flows through the electrochemical cell. If the voltage is sufficient to initiate a reaction, a current develops in the cell. The greater the magnitude of the current, the greater the rate of reaction and the greater the rate of hydrogen production.

The results obtained for the electrochemical cell is provided in Figure 4 herein which shows a plot of the current that develops in the electrochemical cell as a function of the voltage applied by an external source. Curves are shown at 38 ˚C and 60 ˚C. The results shown in Fig. 4 have been corrected for the Ohmic resistance of the testing cell and comparison cell. The results show that the production of hydrogen from methanol in the presence of a base without the intentional inclusion of water in the electrolyte solution occurs at a voltage of less than 0.1 V at both temperatures. As

the voltage is increased above 0.1 V, the hydrogen production reaction accelerates. Especially pronounced increases in the hydrogen production rate occur above about 0.45 V and about 0.35 V at 38 ˚C and 60 ˚C, respectively.

This example shows that hydrogen production occurs through the electrolysis of methanol in the presence of KOH without the intentional inclusion of water in the electrolyte solution.

The examples and disclosure set forth hereinabove show that production of hydrogen from organic substances occurs through electrochemical reactions of organic substances in the presence of water, acid and base. The examples and disclosure set forth hereinabove also shows that the production of hydrogen from water occurs through electrochemical reactions of water in the presence of base. Bases in reactions with water or organic substances may be present at concentrations ranging from zero (e.g. reaction of methanol with water in the presence of an acid) to intermediate (e.g. reaction of methanol with KOH where KOH is present at a concentration of 6.4 M) to high (e.g. reaction of methanol and water with KOH where KOH is present at a concentration of 9 M or reaction of water with KOH where KOH is present at a concentration of 12 M). It is to be appreciated by persons in the art that other concentrations of base such as, but not limited to, 1 M, 3 M, 6 M etc. are also operative within the scope of the instant invention. Electrolyte solutions including base concentrations ranging continuously from nearly zero up to the solubility limit of the base in the electrolyte solution are among the embodiments of the instant invention. As described hereinabove, the concentration of base included in the electrolyte solution may influence the number of equivalents of hydroxide ion that react with an organic substance as well as the by-products produced in a hydrogen production reaction of an organic substance with a base.

## RECYCLING AND RECOVERY OF BY-PRODUCTS

Realization of the beneficial properties of reactions that produce hydrogen from organic substances and bases in chemical and electrochemical reactions requires a system level consideration of the costs and overall efficiency of the reactions. In addition to energy inputs and raw materials, consideration of the disposal or utilization of by-products must be made. Many of the reactions of a base with hydrocarbons, oxygenated hydrocarbons and other organic substances discussed in the co-pending parent applications involve the formation of the carbonate ion ($CO_3^{2-}$) or bicarbonate ion ($HCO_3^-$) as a by-product. In order to enhance the efficiency and economic viability of these reactions, it is necessary to devise ways to effectively dispense with the carbonate ion and/or bicarbonate ion by-products. It is particularly desirable to dispense with by-products in such a way as to avoid the production of environmentally harmful gases and/or in such a way as to regenerate the base reactant.

The instant invention is further concerned with the recovery and re-utilization of carbonate and bicarbonate ion by-products formed in reactions of organic substances with bases to produce hydrogen gas. Representative hydrogen producing reactions have been previously described above and in U.S. Patent No. 6,607,707 and generally involve the reaction of an organic substance with a base to produce hydrogen gas along with bicarbonate and/or carbonate ion as a by-product in a chemical or electrochemical reaction. The instant invention provides processes for recycling carbonate and bicarbonate ion by-products. The invention is initially illustrated in the context of carbonate ion by-products. Similar considerations apply to bicarbonate ion by-products and will be described later herein.

One embodiment of the instant invention focuses on the carbonate ion by-product that forms in many of the hydrogen producing reactions within the scope of the instant invention. Hydrogen producing reactions that form a carbonate ion by-product may generally be written:

$$\text{organic substance} + \text{metal hydroxide} \rightarrow \text{hydrogen gas} + \text{metal carbonate} \qquad \text{(I)}$$

where water may also be present as a reactant. Organic substances that react according to the hydrogen producing reaction (I) include hydrocarbons (e.g. alkanes, alkenes, alkynes and substituted forms thereof) and oxygenated hydrocarbons (e.g. alcohols, aldehydes, ketones, ethers, carboxylic acids and substituted forms thereof).

The instant invention provides a recycle process for the carbonate by-product formed in the hydrogen producing reaction (I). In one embodiment, the metal carbonate product is a soluble metal carbonate and a three-step recycle process as shown below is provided:

$$\text{metal carbonate} + \text{metal}^* \text{ hydroxide} \rightarrow \text{metal hydroxide} + \text{metal}^* \text{ carbonate} \qquad \text{(A)}$$

$$\text{metal}^* \text{ carbonate} + \text{heat} \rightarrow \text{metal}^* \text{ oxide} + \text{carbon dioxide} \qquad \text{(B)}$$

$$\text{metal}^* \text{ oxide} + \text{water} \rightarrow \text{metal}^* \text{ hydroxide} \qquad \text{(C)}$$

where metal and metal* refer to different metals and metal* carbonate is a solid. In another embodiment, the metal carbonate product of the hydrogen producing reaction (I) is a solid and a two-step recycle process according to reactions (B) and (C) above is provided. Further description and examples of specific embodiments of the instant recycle process are provided hereinbelow.

The recycle process of the instant is conveniently discussed in the context of a representative hydrogen producing reaction (I) as shown above. As an example, the reaction of methanol ($CH_3OH$) with sodium hydroxide (NaOH) in an aqueous medium may be considered. Methanol and sodium hydroxide react to produce hydrogen gas according to the following reaction labeled (II):

$$CH_3OH_{(l)} + 2NaOH_{(aq)} \rightarrow 3H_{2(g)} + Na_2CO_{3(aq)} \qquad \text{(II)}$$

The by-product in this reaction, sodium carbonate ($Na_2CO_3$), is a soluble carbonate salt that remains in solution upon liberation of hydrogen gas. In solution, sodium carbonate dissociates into sodium ions ($Na^+$) and carbonate ions ($CO_3^-$). Instead of discarding the sodium carbonate by-product solution as a waste product of the reaction, the instant invention seeks to reutilize the carbonate ion in a recycle process.

One embodiment of the instant carbonate recycling process is now described. In this embodiment, the sodium carbonate by-product solution is reacted in a three step recycle process summarized by the following reactions:

$$Na_2CO_{3(aq)} + Ca(OH)_{2(aq)} \;\square\; 2NaOH_{(aq)} + CaCO_{3(s)} \qquad (1)$$

$$CaCO_{3(s)} + \text{heat} \rightarrow CaO_{(s)} + CO_{2(g)} \qquad (2)$$

$$CaO_{(s)} + H_2O_{(l)} \rightarrow Ca(OH)_{2(aq)} \qquad (3)$$

In the first step, a carbonate metathesis reaction step, sodium carbonate reacts with calcium hydroxide to form sodium hydroxide and calcium carbonate. The sodium hydroxide produced is soluble and remains in solution. The calcium carbonate is nearly insoluble in solution and consequently precipitates upon its formation in the reaction. The solution phase of the product of the first reaction substantially comprises aqueous sodium hydroxide. The calcium carbonate solid can be separated from the solution phase and the solution phase can subsequently be used as the base reactant in the hydrogen producing reaction (II) described hereinabove. In the second step, a metal carbonate thermal decomposition step, the solid calcium carbonate is thermally decomposed to form calcium oxide and carbon dioxide and in the third step, the calcium oxide is reacted with water to form calcium hydroxide. The calcium hydroxide formed in the third step can be subsequently utilized in further implementation of the recycle process.

The instant recycle process beneficially dispenses with the carbonate ion formed in the hydrogen producing reaction. The recycle process is sustainable in the sense that the calcium hydroxide reactant required in the first step is regenerated in the third step. Thus, the need for fresh calcium hydroxide is limited only to amounts needed to compensate for any side reactions or other inefficiencies in the recycle process. The combination of the hydrogen producing reaction and recycle process is also sustainable in the sense that the sodium hydroxide reactant required for the hydrogen producing reaction is generated in the first step of the recycle process. This can be seen by combining the hydrogen producing reaction (II) and the recycle reaction (1), (2), and (3) to obtain the following overall net reaction:

$$CH_3OH_{(l)} + H_2O_{(l)} \rightarrow 3H_{2(g)} + CO_{2(g)}$$

The net reaction is simply a reaction of methanol with water to form hydrogen gas and carbon dioxide. The net reaction corresponds closely to the reaction utilized in conventional steam reformation, but differs in that high temperatures and thus gaseous methanol and water (steam) reactants are not necessary in the instant process. Instead, through chemical or electrochemical reaction with a base and recycling of carbonate by-product it becomes possible with the instant invention to achieve the production of hydrogen from organic substances at milder conditions without the co-generation of carbon monoxide.

The foregoing example is representative of carbonate recycling according to the instant invention. Specific considerations pertinent to different embodiments are governed by the solubilities of some of the compounds participating in the reactions. Of greatest concern are the solubility of the metal hydroxide base reactant used in the hydrogen producing reaction (I), the solubility of the metal carbonate product formed in the hydrogen producing reaction (I), and

the solubility of the metal carbonate product formed in the metathesis step of the recycle process. In a preferred embodiment, the hydrogen producing reaction (I) employs a soluble metal hydroxide. This embodiment is preferred because a soluble metal hydroxide base in the hydrogen producing reaction (1) facilitates hydrogen reaction and provides faster rates of hydrogen production. The solubility of a metal hydroxide compound can be determined by considering the solubility product constant ($K_{sp}$) of the compound. Metal hydroxides with high solubility product constants are more soluble than metal hydroxides with low solubility product constants. The more soluble metal hydroxides include hydroxides of the alkali metals, $Ca^{2+}$, $Sr^{2+}$, $Ba^{2+}$ and $NH_4^+$. The foregoing example employs sodium hydroxide as the base reactant in the hydrogen producing reaction (II).

The metal carbonate formed in the hydrogen producing reaction (I) is the carbonate of the metal cation present in the metal hydroxide base of the hydrogen producing reaction. The solubility of the metal carbonate product is thus dictated by the metal hydroxide base selected for the hydrogen producing reaction. The solubility of the carbonate of a metal frequently, but not always, mirrors the solubility of the hydroxide of the metal. Typically, carbonates of metals whose hydroxides are soluble are also soluble. Exceptions, however, do exist. The solubility of particular metal carbonate can be determined by considering its solubility product constant ($K_{sp}$). The more soluble metal carbonates include carbonates of the alkali metals and $NH_4^+$. In the foregoing example, sodium hydroxide was employed as the base reactant in the hydrogen producing reaction (II) and led to the formation of sodium carbonate where both sodium hydroxide and sodium carbonate are soluble. Use of, for example, calcium hydroxide as the base reactant in the hydrogen producing reaction leads to the formation of calcium carbonate, a relatively insoluble compound, and is considered in an alternative embodiment hereinbelow.

In the instant recycle process, it is preferable for the metal carbonate formed in the hydrogen producing reaction (I) to be soluble. This preference arises because the metal carbonate formed in the hydrogen producing reaction (I) becomes a reactant in the metathesis step of the recycle process and follows from the fact that the metathesis reaction occurs more efficiently with a soluble metal carbonate reactant. A related rationale for the preference follows from the desire to achieve sustainability with respect to the metal hydroxide in the hydrogen producing reaction. As indicated above, it is preferable for the metal hydroxide reactant in the hydrogen producing reaction to be soluble. This implies a preference that the metal hydroxide product of the carbonate metathesis reaction of the recycle process be soluble, since this metal hydroxide is ultimately reutilized in the hydrogen producing reaction. A soluble metal carbonate reactant in the metathesis reaction facilitates the objective of obtaining a soluble metal hydroxide product since, in virtually all cases, metal ions having soluble carbonates also have soluble hydroxides.

The solubility of the metal hydroxide product of the metathesis reaction of the recycle process influences the preferred degree of solubility of the metal carbonate formed in the metathesis reaction and accordingly, influences the selection of metal hydroxide reactant employed in the metathesis reaction. In order to expedite separation of the products of the metathesis step, it is preferable that the metal carbonate product and the metal hydroxide product have contrasting solubilities so that one of the products is substantially in one phase (e.g. a liquid phase) and the other of the products is in a second phase (e.g. solid or precipitate phase). A solubility contrast simplifies separation of one product from the other. In light of the preference discussed hereinabove that the metal hydroxide product of the metathesis reaction be soluble, this consideration leads to a preference that the metal carbonate product of the metathesis reaction be insoluble or only weakly soluble. The solubility contrast (soluble vs. insoluble or weakly soluble) facilitates separation of the metal hydroxide product (which may be returned to the hydrogen producing reaction for further reaction) and the metal carbonate product (which contains the carbonate ion by-product of the hydrogen producing reaction and which is subsequently reacted in decomposition and hydrolysis reactions of the recycle process).

The solubility of the metal carbonate product formed in the metathesis reaction can be influenced by the selection of metal hydroxide reactant employed in the metathesis reaction. More specifically, the metal cation of the metal hydroxide reactant combines with the carbonate ion of the metal carbonate reactant (which is the metal carbonate product of the hydrogen producing reaction) to form the metal carbonate product of the metathesis reaction. Choice of the metal cation of the metal hydroxide reactant thus becomes a degree of freedom in controlling whether the metal carbonate product of the metathesis reaction precipitates. Precipitation is promoted through the use of a metal hydroxide reactant whose metal cation has a low carbonate $K_{sp}$ value. The $K_{sp}$ values of several weakly soluble or insoluble metal carbonates are included in Table 4 below:

Table 4 Solubility Product Constant ($K_{sp}$) Values of Representative Metal Carbonates at 25 °C

| Compound | $K_{sp}$ |
|---|---|
| $CaCO_3$ | $3.3 \times 10^{-9}$ |
| $BaCO_3$ | $2.0 \times 10^{-9}$ |
| $CdCO_3$ | $1.8 \times 10^{-14}$ |
| $CoCO_3$ | $1.0 \times 10^{-10}$ |

(continued)

| Compound | $K_{sp}$ |
|---|---|
| $CuCO_3$ | $3 \times 10^{-12}$ |
| $PbCO_3$ | $7.4 \times 10^{-14}$ |
| $MgCO_3$ | $3.5 \times 10^{-8}$ |
| $NiCO_3$ | $1.3 \times 10^{-7}$ |
| $SrCO_3$ | $5.4 \times 10^{-10}$ |
| $ZnCO_3$ | $1.0 \times 10^{-10}$ |
| $FeCO_3$ | $3.5 \times 10^{-11}$ |

Use of a metal hydroxide reactant that includes a cation from represented in the carbonates of Table 4, promotes the formation of a carbonate precipitate in the metathesis reaction. In the foregoing example, calcium hydroxide was used as the metal hydroxide reactant in the metathesis reaction. The cation of calcium hydroxide combined with the carbonate ion of the (soluble) sodium hydroxide to form weakly soluble calcium carbonate ($K_{sp}$ = $3.3 \times 10^{-9}$) in the metathesis reaction. The selection of calcium hydroxide as a reactant thus permitted the formation of a weakly soluble metal carbonate in the metathesis reaction. Through consideration of $K_{sp}$, other suitable metal hydroxide reactants may be similarly identified to promote the formation of weakly soluble or insoluble metal carbonate products. Use of barium hydroxide ($Ba(OH)_2$), for example, as the metal hydroxide reactant in the metathesis reaction leads to formation of weakly soluble and hence readily precipitatable $BaCO_3$. Preferably, the $K_{sp}$ value of the metal carbonate product is less than $10^{-6}$.

A secondary consideration in the selection of the metal hydroxide reactant of the metathesis reaction is its solubility. As indicated hereinabove, the metal hydroxide reactant of the metathesis reaction reacts with the metal carbonate product of the hydrogen producing reaction where the metal carbonate product is preferably soluble and provided in the form of an aqueous solution as a reactant for the metathesis reaction. In this preferred embodiment, it is preferable for the metal hydroxide reactant of the metathesis reaction to be at least partially soluble in the metal carbonate reactant solution so that the reaction proceeds at a reasonable rate. High solubility of the metal hydroxide reactant is not needed, however, because precipitation of the carbonate product shifts the metathesis reaction equilibrium toward the product side and helps to drive the reaction even if the metal hydroxide reactant is only weakly soluble. Consequently, subject to the preference described hereinabove of obtaining a weakly soluble or insoluble carbonate product in the metathesis reaction, selection of the metal hydroxide reactant in the metathesis reaction should include consideration of its solubility. As indicated hereinabove, hydroxides of the alkali metals, $Ca^{2+}$, $Sr^{2+}$, and $Ba^{2+}$ are among the most soluble. Hydroxides of the alkali metals, while preferred as reactants in the hydrogen producing reaction, are less preferred as reactants in the metathesis reaction since they produce carbonates that are soluble. $Ca^{2+}$, $Sr^{2+}$, and $Ba^{2+}$, in contrast, provide weakly soluble carbonates and have hydroxides that are sufficiently soluble to promote the metathesis reaction. Consequently, hydroxides of $Ca^{2+}$, $Sr^{2+}$, and $Ba^{2+}$ are the preferred metal hydroxide reactants in the metathesis reaction.

A preferred embodiment of the instant invention thus includes a soluble metal hydroxide reactant that leads to the formation of a soluble metal carbonate in the hydrogen producing reaction and a metal hydroxide reactant in the metathesis reaction whose carbonate compound is weakly soluble or insoluble. Alkali metal hydroxides are the preferred reactants in the hydrogen producing reaction since they form highly soluble carbonates, while the hydroxides of $Ca^{2+}$, $Sr^{2+}$, and $Ba^{2+}$ are the preferred metal hydroxide reactants in the metathesis reaction. In an example of a preferred embodiment, the following general metathesis reaction may be written:

$$M_2CO_{3(aq)} + M'(OH)_{2(aq)} \rightarrow 2MOH_{(aq)} + M'CO_{3(s)}$$

where M is an alkali metal and M' is $Ca^{2+}$, $Sr^{2+}$, or $Ba^{2+}$. The metal hydroxide product MOH is soluble and is produced in the form of an aqueous MOH solution and the metal carbonate product $M'CO_3$ is formed as a precipitate.

The precipitated metal carbonate product of the metathesis reaction is decomposed in a thermal decomposition step (e.g. step 2 in the foregoing example) to form a metal oxide and carbon dioxide gas. Carbonate thermal decomposition is a well-known reaction and essentially all metal carbonates undergo decomposition. Thermal decomposition of metal carbonates can be depicted generally by the following reaction:

$$MCO_{3(s)} + heat \rightarrow MO_{(s)} + CO_{2(g)}$$

The above reaction is written for a divalent metal ($M^{2+}$). Analogous reactions can be written for carbonates of metals that are monovalent, trivalent etc.

The metal oxide formed in the decomposition step is subsequently reacted with water to form a hydroxide (e.g. step 3 in the foregoing example). The general reaction for this step can be written:

$$MO_{(s)} + H_2O_{(l)} \rightarrow M(OH)_{2(aq)}$$

The above reaction is written for a divalent metal ($M^{2+}$). Analogous reactions can be written for carbonates of metals that are monovalent, trivalent etc.

In an alternative embodiment of the instant invention, the hydrogen producing reaction (I) provides a solid metal carbonate as a product. This situation occurs when the metal carbonate product of the hydrogen producing reaction (I) is insoluble or weakly soluble and is present when the carbonate of the metal cation employed in the metal hydroxide base reactant of the hydrogen producing reaction (I) is weakly soluble or insoluble. When a solid carbonate is formed in the hydrogen producing reaction (I), it may be recycled by thermal decomposition to form a metal oxide and carbon dioxide followed by reaction of the metal oxide with water to reform the metal hydroxide initially employed in the hydrogen producing reaction.

Representative hydrogen producing reactions in accordance with this embodiment are those that include metal hydroxide reactants other than the hydroxides of the alkali metals or $NH_4^+$, since the alkali metals and $NH_4^+$ form soluble carbonates and are recycled according to the method described hereinabove. Of the remaining potential metal hydroxide reactants in the hydrogen producing reaction (I), those that are at least partially soluble are preferred in this embodiment. Representative metal hydroxide reactants that are sufficiently soluble to be effective for the hydrogen producing reaction (I) and that provide weakly soluble or insoluble metal carbonate products include the hydroxides of $Ca^{2+}$, $Sr^{2+}$, and $Ba^{2+}$.

An example according to this embodiment is a reaction of ethanol ($C_2H_5OH$) with $Sr(OH)_2$. The hydrogen producing reaction of this example is:

$$C_2H_5OH_{(l)} + 2Sr(OH)_{2(aq)} + H_2O_{(l)} \rightarrow 6H_{2(g)} + 2SrCO_{3(s)}$$

where the strontium carbonate product precipitates due to its low solubility product constant. The carbonate product may be recycled through thermal decomposition followed by reaction with water according to the following reactions:

$$SrCO_{3(s)} + heat \rightarrow SrO_{(s)} + CO_{2(g)}$$

$$SrO_{(s)} + H_2O_{(l)} \rightarrow Sr(OH)_{2(aq)}$$

In this recycle process, the strontium hydroxide reactant originally employed in the hydrogen producing reaction is regenerated. Analogous reactions can be written for other organic substances and other metal hydroxides that react in a hydrogen producing reaction according to the instant invention to produce an insoluble or weakly soluble metal carbonate.

Related variations of the foregoing embodiment include embodiments in which carbonate recovery or partial carbonate recycling occur. In these embodiments, less than all of the three steps of the recycling process described hereinabove are employed. The metal carbonate formed in the hydrogen producing reaction, for example, may be directly recovered and discarded or utilized for other purposes. The metal carbonate formed in the hydrogen producing reaction may also be reacted in the metathesis reaction described hereinabove to form a different metal carbonate that is subsequently discarded or utilized for other purposes. The metal carbonate formed in the metathesis reaction may be thermally decomposed to form an oxide without further reaction of the oxide with water. Similarly, a solid metal carbonate formed in the hydrogen producing reaction may be thermally decomposed to form an oxide without further reaction with water.

As indicated hereinabove, the hydrogen producing reactions in accordance with the instant invention may also produce a bicarbonate ion by-product. The formation of bicarbonate ion becomes favorable under conditions of lower metal hydroxide base concentration and lower pH relative to implementations of the instant hydrogen producing reactions that lead to the formation of carbonate ion as a by-product. Representative pH ranges that tend to favor the formation of carbonate vs. bicarbonate by-products have been discussed above and in U.S. Patent No. 6,607,707.

Hydrogen producing reactions that form a bicarbonate by-product may generally be written:

$$\text{organic substance} + \text{metal hydroxide} + \text{water} \rightarrow \text{hydrogen gas} + \text{metal bicarbonate} \qquad \text{(III)}$$

Organic substances that react according to the hydrogen producing reaction (III) include hydrocarbons (e.g. alkanes, alkenes, alkynes and substituted forms thereof) and oxygenated hydrocarbons (e.g. alcohols, aldehydes, ketones,

ethers, carboxylic acids and substituted forms thereof).

Embodiments of the instant invention provide a recycle process for the bicarbonate by-product formed in the hydrogen producing reaction (III). In one embodiment, the metal bicarbonate product of the hydrogen producing reaction (III) is converted to a metal carbonate and the metal carbonate is recycled as described in reactions (A), (B), and (C) described hereinabove. Conversion of a metal bicarbonate to a metal carbonate can be effected through heating, as indicated in the following reaction:

$$\text{metal bicarbonate} + \text{heat} \rightarrow \text{metal carbonate} + \text{water} + \text{carbon dioxide}$$

The foregoing reaction occurs for aqueous solutions of metal bicarbonates or precipitated metal bicarbonates.

As an example of bicarbonate recycling according to the instant invention, the following hydrogen producing reaction may be considered:

$$CH_3OH_{(l)} + KOH_{(aq)} + H_2O_{(l)} \rightarrow 3H_{2(g)} + KHCO_{3(aq)}$$

The bicarbonate by-product, in the form of an aqueous solution of $KHCO_3$, may be recycled by first converting it to a carbonate through the reaction:

$$2KHCO_{3(aq)} + \text{heat} \rightarrow K_2CO_{3(aq)} + H_2O_{(l)} + CO_{2(g)}$$

and then reacting the carbonate as described hereinabove through a series of reactions such as:

$$K_2CO_{3(aq)} + Ba(OH)_{2(aq)}\ 2KOH_{(aq)} + BaCO_{3(s)} \qquad (4)$$

$$BaCO_{3(s)} + \text{heat} \rightarrow BaO_{(s)} + CO_{2(g)} \qquad (5)$$

$$BaO_{(s)} + H_2O_{(l)} \rightarrow Ba(OH)_{2(aq)} \qquad (6)$$

As another example of bicarbonate recycling according to the instant invention, the following reaction can be considered:

$$CH_3OH_{(l)} + Sr(OH)_{2(aq)} + 2H_2O_{(l)} \rightarrow 5H_{2(g)} + Sr(HCO_3)_{2(s)}$$

where the bicarbonate product is provided in the form of a precipitate. The bicarbonate precipitate may be dispensed with through conversion to a carbonate and recycling of the carbonate as described hereinabove according to the reactions:

$$Sr(HCO_3)_{2(s)} + \text{heat} \rightarrow SrCO_{3(s)} + H_2O_{(l)} + CO_{2(g)}$$

$$SrCO_{3(s)} + \text{heat} \rightarrow SrO_{(s)} + CO_{2(g)}$$

$$SrO_{(s)} + H_2O_{(l)} \rightarrow Sr(OH)_{2(aq)}$$

The disclosure and discussion set forth herein is illustrative and not intended to limit the practice of the instant invention. Numerous equivalents and variations thereof are envisioned to be within the scope of the instant invention. It is the following claims, including all equivalents, in combination with the foregoing disclosure, which define the scope of the instant invention.

## Claims

**1.** A process for producing hydrogen gas comprising the steps of
reacting an organic substance with a first metal hydroxide in a first reaction, said first reaction producing hydrogen gas and a first metal carbonate; and
reacting said first metal carbonate with a second metal hydroxide in a second reaction, said second reaction producing a second metal carbonate.

**2.** The process of claim 1, wherein said second metal carbonate is produced in the form of a precipitate.

**3.** The process of claim 2, further comprising the step of thermally decomposing said precipitated second metal carbonate, said thermal decomposition step producing a metal oxide.

**4.** The process of claim 3, further comprising the step of reacting said metal oxide with water.

**5.** The process of claim 1, wherein said organic substance is a hydrocarbon or oxygenated hydrocarbon.

**6.** The process of claim 1, wherein said organic substance is an alcohol.

**7.** The process of claim 1, wherein said organic substance is methanol.

**8.** The process of claim 1, wherein said organic substance is ethanol or propanol.

**9.** The process of claim 1, wherein said organic substance is an aldehyde.

**10.** The process of claim 1, wherein said first metal hydroxide is an alkali metal hydroxide.

**11.** The process of claim 1, wherein said first metal hydroxide is ammonium hydroxide.

**12.** The process of claim 1, wherein said first metal hydroxide is in the form of an aqueous solution.

**13.** The process of claim 1, wherein said second metal hydroxide is calcium hydroxide, strontium hydroxide or barium hydroxide.

**14.** The process of claim 1, wherein the solubility product constant ($K_{sp}$) of said second metal carbonate is less than $10^{-6}$.

**15.** The process of claim 1, wherein said second reaction further produces said first metal hydroxide.

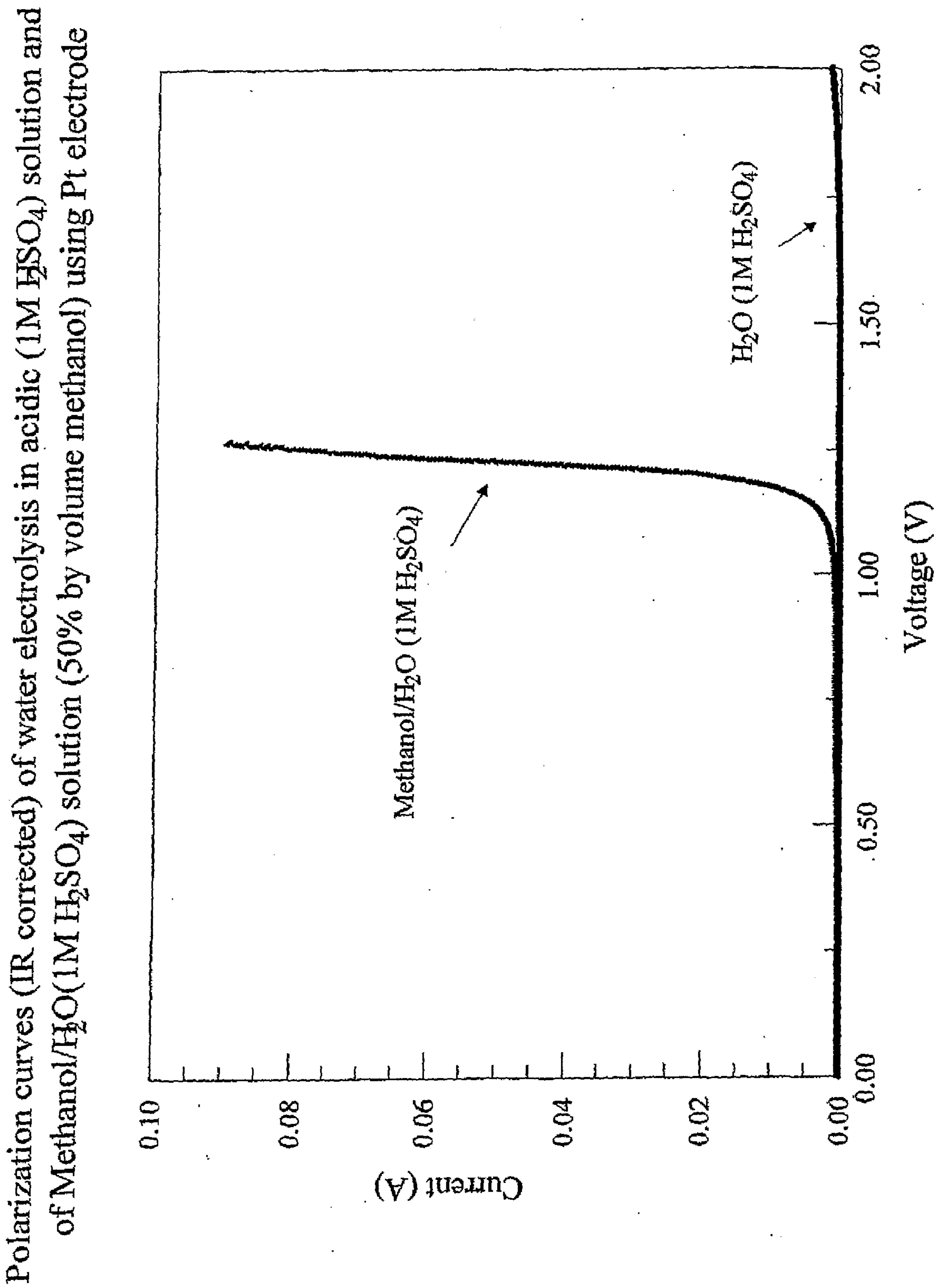
Polarization curves (IR corrected) of water electrolysis in acidic (1M $H_2SO_4$) solution and of Methanol/$H_2O$(1M $H_2SO_4$) solution (50% by volume methanol) using Pt electrode
Current (A)
0.10
0.08
0.06
0.04
0.02
0.00
0.00
0.50
1.00
1.50
2.00
Voltage (V)
Methanol/$H_2O$ (1M $H_2SO_4$)
$H_2O$ (1M $H_2SO_4$)

FIG. 1

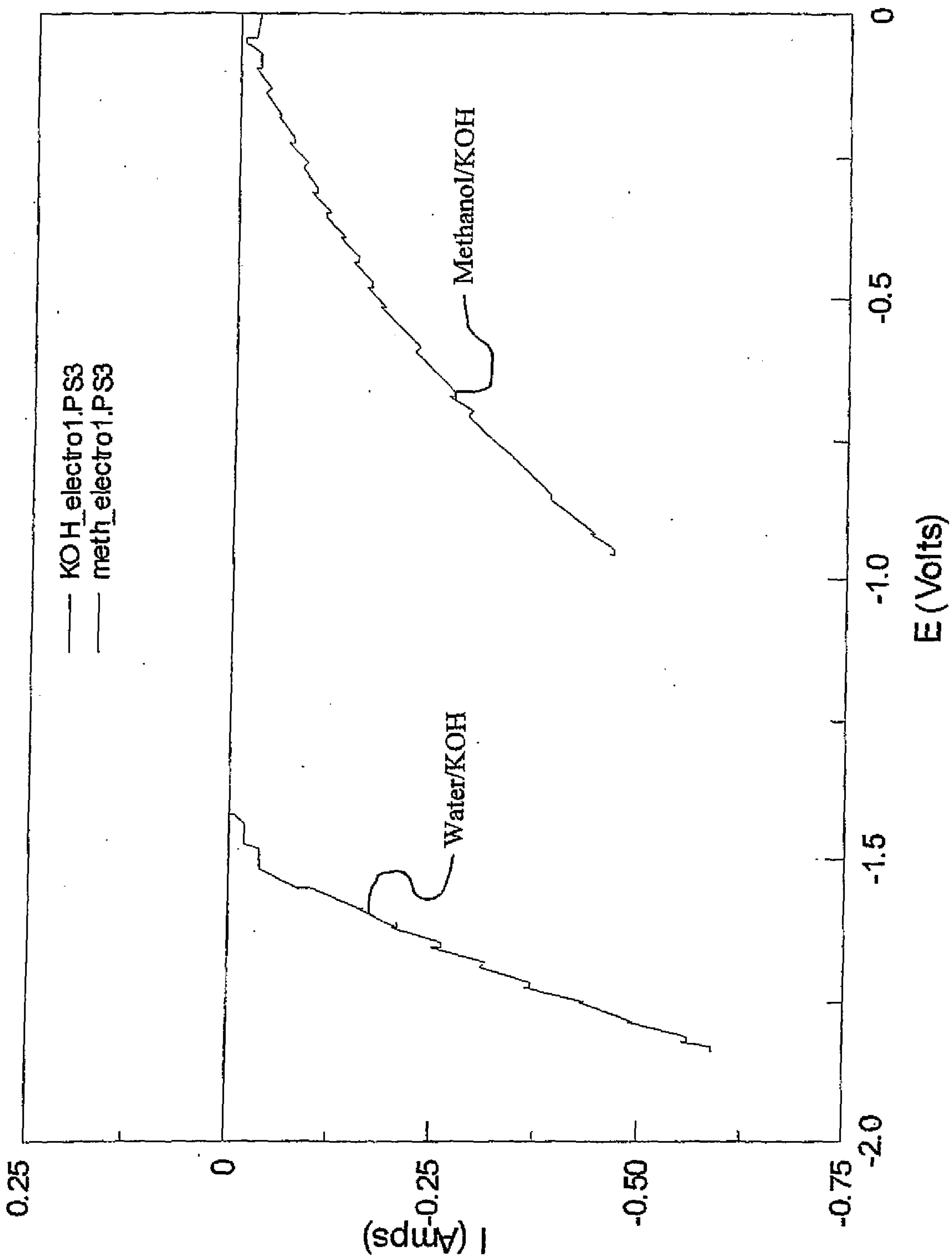
KOH_electro1.PS3
meth_electro1.PS3
Methanol/KOH
Water/KOH
0.25
0
-0.25
-0.50
-0.75
I (Amps)
-2.0
-1.5
-1.0
-0.5
0
E (Volts)

FIG. 2

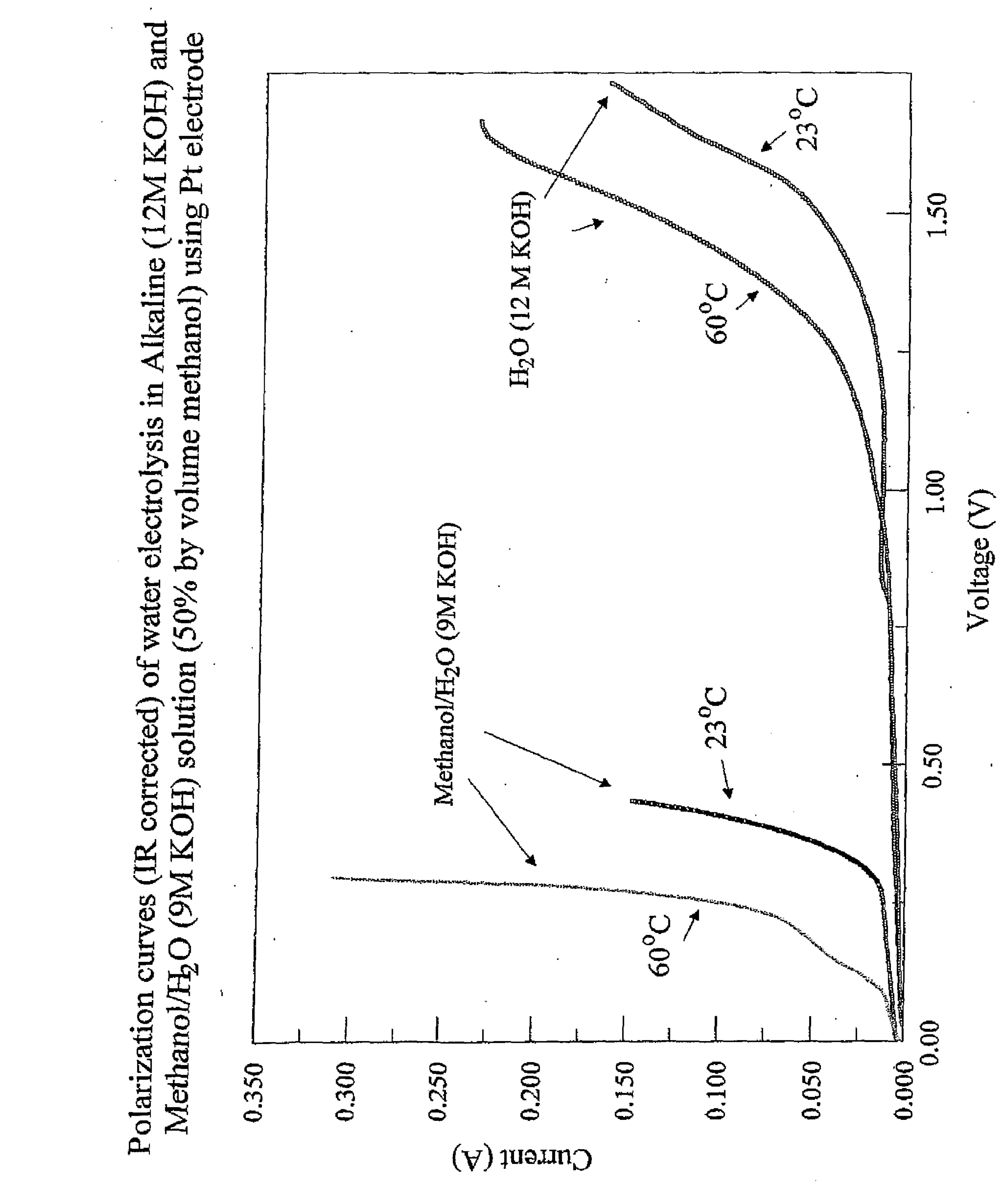

Polarization curves (IR corrected) of water electrolysis in Alkaline (12M KOH) and Methanol/$H_2O$ (9M KOH) solution (50% by volume methanol) using Pt electrode
Current (A)
0.350
0.300
0.250
0.200
0.150
0.100
0.050
0.000
0.00
0.50
1.00
1.50
Voltage (V)
Methanol/$H_2O$ (9M KOH)
60°C
23°C
$H_2O$ (12 M KOH)
60°C
23°C


FIG. 3

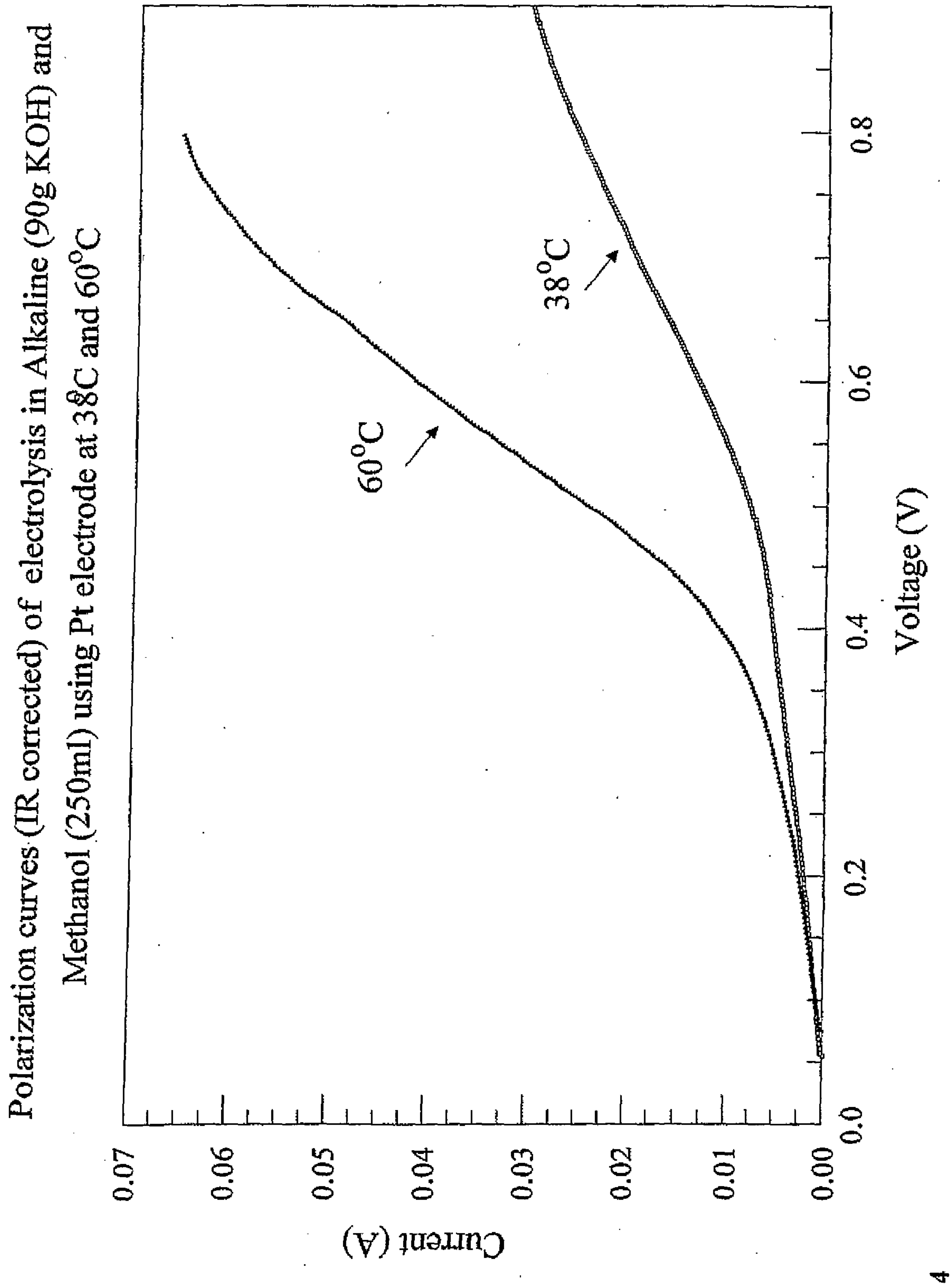

Polarization curves (IR corrected) of electrolysis in Alkaline (90g KOH) and
Methanol (250ml) using Pt electrode at 38C and 60°C
60°C
38°C
Current (A)
0.00
0.01
0.02
0.03
0.04
0.05
0.06
0.07
Voltage (V)
0.0
0.2
0.4
0.6
0.8


FIG. 4

Europäisches Patentamt
European Patent Office
Office européen des brevets

# EUROPEAN SEARCH REPORT

Application Number
EP 10 17 6569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,P | WO 03/016211 A1 (OVONIC BATTERY CO [US]) 27 February 2003 (2003-02-27) * the whole document * ----- | 1-15 | INV. C01B3/22 C01B3/24 C01B3/36 C25B1/02 |
| Y | US 5 219 541 A (ZOLOTOOCHIN VLADIMIR M [US]) 15 June 1993 (1993-06-15) * the whole document * ----- | 1-15 | |
| A | KRUSE A ET AL: "Gasification of Pyrocatechol in Supercritical Water in the Presence of Potassium Hydroxide" INDUSTRIAL & ENGINEERING CHEMISTRY RESEARCH, AMERICAN CHEMICAL SOCIETY. WASHINGTON, US, vol. 39, no. 12, 16 November 2000 (2000-11-16), pages 4842-4848, XP002388666 ISSN: 0888-5885 * left-hand column, paragraph 3 * ----- | 1-15 | |
| A | WO 88/05422 A (ONSAGER, OLAV-T) 28 July 1988 (1988-07-28) * claim 1 * ----- | 1-15 | TECHNICAL FIELDS SEARCHED (IPC) C25B C01B C01F C01D |

The present search report has been drawn up for all claims

3

| Place of search | Date of completion of the search | Examiner |
|---|---|---|
| Munich | 18 October 2010 | Hammerstein, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 17 6569

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2010

| Patent document cited in search report | Publication date | Patent family member(s) | Publication date |
|---|---|---|---|
| WO 03016211 A1 | 27-02-2003 | EP 1446354 A1 | 18-08-2004 |
| | | JP 4276067 B2 | 10-06-2009 |
| | | JP 2005500235 T | 06-01-2005 |
| | | US 2003089620 A1 | 15-05-2003 |
| | | US 2003044349 A1 | 06-03-2003 |
| US 5219541 A | 15-06-1993 | NONE | |
| WO 8805422 A | 28-07-1988 | AU 1154888 A | 10-08-1988 |
| | | CA 1336037 C | 27-06-1995 |
| | | EP 0299995 A1 | 25-01-1989 |
| | | NO 873375 A | 28-07-1988 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 321935 A
- US 6607707 B
- US 636093 A